# EUROPEAN PATENT SPECIFICATION

(11) **EP 1 921 499 B1**
(45) Date of publication and mention of the grant of the patent: **15.05.2013**
(21) Application number: 05812650.9
(22) Date of filing: 24.11.2005
(51) Int. Cl.: G03B 17/56, F16M 11/16

(54) **THE CAMERA PAN HEAD HAVING TWO CLAMPS LOCKED CONNECTOR**
KAMERA-PANORAMAKOPF MIT ZWEIKLEMMEN-VERRIEGELUNGSVERBINDER
TÊTE PANORAMIQUE DE CAMÉRA À CONNECTEUR FERMÉ PAR DEUX ATTACHES

(30) Priority: 09.08.2005 CN 200510036399
(43) Date of publication of application: 14.05.2008
(73) Proprietor: Yang, Yongjian, Gunagdong 510-050 (CN)
(72) Inventor: Yang, Yongjian, Gunagdong 510-050 (CN)
(74) Representative: Vigars, Christopher Ian
(86) International application number: PCT/CN2005/001990
(87) International publication number: WO 2007/016826

(56) References cited:
- CN-A- 1 554 980
- CN-A- 1 556 439
- CN-A- 1 556 439
- DE-U1- 9 016 714
- JP-A- 10 160 094
- US-A- 5 288 044
- US-A- 5 419 520
- US-B1- 6 371 424

## Description

### Technical fields of the invention

This invention involves a kind of camera pan head having a connector, particularly a kind of camera pan head having a connector with two-clamps locking, a quadrate knob orientation connection and a turntable. It belongs to the technical field of photographic equipment.

### Prior art

In the installation between the camera and the tripod, the connecting plate, connecting turntable, and the turn platform are needed. These types of devices mostly have big size, not agile after connected with camera, and not easy for carrying. Besides, there is not orientation fixing, the camera is easy to loose and not secure. In general, camera ball head includes 3-dimension ball head and inverse sphere design ball head. The former needs adjustment in 3 different directions, which has slow operation, and be inconvenient when taking photos for the quick disappeared scene. Whereas, the sphere of the inverse sphere ball head faces downward, with the pan head fixing onto the camera support and the camera fixing on the sphere. This kind of construction will have the shortcoming of installation complicated, less clamping force, and low stability. Under large angle adjustment this kind of design needs to have 2 directions adjustment, and is inconvenient for the end-user. When the camera installed onto the tripod, it will be very complicated when taking photo under multi angle. It needs to change the handle position frequently to accomplish the aim. This patent applicant, YANG Yongjian, invented a camera ball head having a fast connector (see CN100354748C). This camera pan head is provided with a fast connector, being compact in construction with high security, which can have multi-angle photo taking continuously. However, this kink of camera pan head has shortcomings as the low clamp force, large volume, and low handle movement. The reliability and stability need further improvement.

### Purpose of the invention

The purpose of this invention is to provide a kind of camera pan head having two clamps locking. This pan head has two clamps locking, and quadrate knob orientation connection and a turntable. This pan head is fast to be installed, easy operation, compact structure, free rotating, easy adjustment for multi-angle photo taking, good clamping force, small volume and good security.

### Technology of the invention

The purpose of this invention is achieved through the following methods:

A camera pan head having a connector with two-clamps locking, a quadrate knob orientation connection and a turntable, the camera pan head includes a sphere, a pan head base and a handle, the sphere faces upward, and the pan head base is mounted on the sphere. The sphere is set in the pan head base with the handle. There is provided with a connecting nut installed with the tripod in the bottom of the camera pan, and a fast connector on the top of the camera pan head, on the upper end of the connector is provided with the components connected with the camera, within the box body of the connector is provided with function components, wherein the function components of the said fast connector comprises a two clamps linkage locking mechanism consisted of a left clamp, a right clamp, a pendulum lever, a hinge and a twist spring; on one side of the camera pan head is provided with a extension handle in layers, the handle under the pan head base in the bottom of the camera pan head base is provided with a turntable mechanism; the fast connector is provided with a connecting knob component for installing the camera with the pan head.

The said function components of the fast connector comprises:

a left and a right clamp, a pendulum lever, a hinge, a twist spring, a press spring and a teeterboard. The hole in the middle of the left and right clamp is fixed with the pan head base with a pin and can be turned around the axis pin. The front end of the clamps is pressed by the twist spring, the back end of clamps is pressed by the manual clamping force when operation. The upper of the right clamp connects with the hinge hole with a axis pin. The hole in the middle of the pendulum lever is fixed with the pan head base with a pin, and can be turned around the axis pin. The hole in the front end of the pendulum lever connects the hinge hole with a axis pin. There is a concave in the lower end of the pendulum lever opposites the clamp. The concave is tooth-connecting with the protruding of the left clamp when locking, so as to provide an anti-loosing action. The concave and the protruding will separate when loosening. There is a hole in one end of the teeterboard connects the cover with a pin. The press spring is installed within the concave in the middle of the teeterboard, while the upper face of the teeterboard keeps touching the pin axis. When the left and the right clamps open, the teeterboard turns up and supports the left clamp in the effect of the press spring. Because of the linkage action, the right clamp will stay in the open position, when the pin axis is supported to the highest position by the teeterboard.

The said turntable is provided with a restriction mechanism, which can fastly lock or loose the turntable by the controlling of a knob.

The knob on the top of the said connecting connects the quadrate plate to form the connecting component, includes the knob connecting the camera by screw thread and the rubber plate adhere with the quadrate plate. The pin inserts into the groove of the knob through a quadrate plate. When the camera is locked with the pan head, the cone face of the knob touches tightly with the cone faces of the left and the right clamps.

This invention has the following merits:

This invention has compact construction, high clamp force, free rotating, multi-angle photo taking, small volume, easy taking, multi-purposed and fast attach with different kinds of camera and tripods. Its high clamping force of the two clamps can allow the camera with long lens stay at 45°. The handle is a extension handle in layers with high turning movement.

### Description of the drawings

Figure 1 is a side view of the section showing the construction of the present invention;
Figure 2 is a principle view of the two-clamps-joining-pole mechanism;
Figure 3 is the construction view of the handle component;
Figure 4 is the cross section view of A-A of figure 3;
Figure 5 is the explosion view of the two-clamps-joining-pole mechanism.

### Embodiments

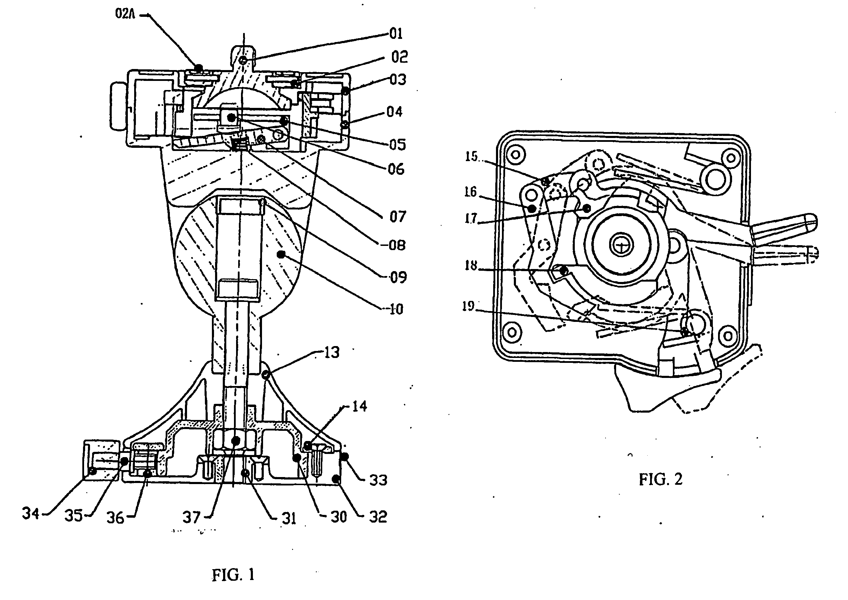

As shown in figures 1- 5, this innovation is a kind of camera pan head having a connector with two clamps locking, a quadrate knob orientation connection, a turntable and a extension handle in layers, consists of 3 main parts: the connector, the pan head, and the turntable set below the pan head. At the bottom of the turntable is provided with a connecting nut fixed with the tripod. On the top of the connector are provided with the quadrate plate02 and the knob01 connect with the camera when using. The knob is connected with the camera by the screw due to the screw connection relationship and the position of concave on the top of the connector with the quadrate plate 02, so that the camera, the pan head and the tripod can be assembled together securely.

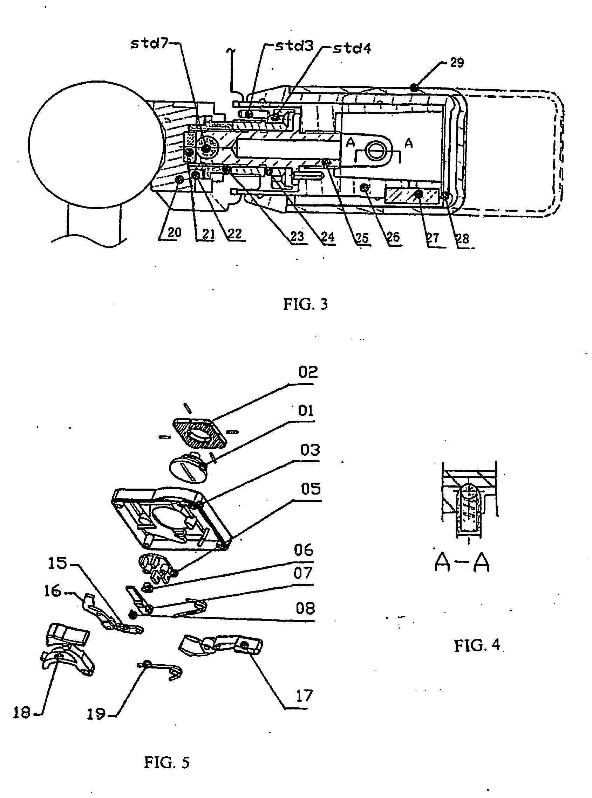

This camera pan head includes sphere 10, pan head base 04 and handle 26. The sphere faces upward, and set onto the pan head base04 with the handle26, the pan head base being mounted to the sphere. The connector is consisted of the function components installed between the box cover03 and the pan head base04. The components of the said pan head connector is as shown as in figure 2, the holes in the middle of the left clamp 18 and the right clamp 17 are movably connected by a pin, while the pin is fixed on the pan head base04. The holes on both ends of the hinge 15 are movably connected with the left clamp 18 and the right clamp 17, fixed onto the pan head base04 by the bolts. The groove in the lower part of the pendulum lever16 is locked with the top of the left clamp. The reposition twist spring 19 will always press the left and the right clamps. As per figure 3, the teeterboard 07 connects with the cover05 with a pin, while the top of which pushes a pin axis06, the middle of the lower part of which presses the spring08 and the end of which contacts with the clamp18. When the camera pushes upon the working face of the pan head, the knob locked in the camera will press the pin axis06, then the pin axis will drive the teeterboard 07 downward. The top end of the teeterboard 07 will detach from the left clamp 18. Under the twist spring 19 pressing, the left and right clamp will be driven and pressed onto the cone face of the knob, so that the groove of the pendulum lever is locked with the left clamp18 by tooth connecting due to the linkage effect of the pendulum lever16 and hinge15 and carry out the linkage locking mechanism of the connector.

As shown in figure 3, the extension handle in layers is consisted of handle26, sliding handle 28, and the rubber cover29 for the handle. The sliding handle28 is mounted on the handle26 and covered with the rubber cover29. The handle26 is provided with a fix key, while the sliding handle 28 is provided with a slot. The key of the handle26 and the slot of the sliding handle 28 are matched by the key27, so that the twist movement can be passed. Under the driving of the screw25, micro-adjusting nut24, nut23, spring22 and rubbing resistant block21, the pressing from the handle26 and the sliding handle28 passes to the left position block20. The handle26 drive the screw25 to push the steel ball on its end, then further push the left position block20, so that the sphere 10 fix tightly on the pan head base04. On the right side of the sphere10 is provided with a right position block and a position nut in reverse to the left ones. The micro-adjusting nut 24 set in the handle26 can adjust the damp when sphere 10 rotating. When the twist movement of the handle is needed to be enhanced, the sliding handle28 can be pulled from the handle 26 with the guiding of the leading key27. So that the overall length of the handle is extended, which can also enlarge the rotating movement. Then the end-user can rotate the handle easier with larger turning moment arm.

Below the pan head sphere is provided with a turntable30. The turntable13 is fixed between the sphere10 and the orientation turntable30 with bolt and nut37. The scale33 is adhered into the groove of the turntable base32. The orientation turntable30 is positioned inside the inner hole of turntable base32 by orientation ring14. Knob34 is installed in one side of the base32 with the screw35 and locking plate36. The loosening and the tightening by the knob34 can control the rotating angle of turntable30. On top of the run-through round hole of sphere10 there is a cap 09 for atheistic and dust-free protection.

This invention works as below:
1. The knob adheres tightly to the bottom of the camera with the quadrate plate02 and the rubber plate02A. The quadrate plate02 is quadrate or polygonal. The rubber plate can protect the camera bottom and increase the friction. When the knob01 presses the pin axis06 downwardly, the quadrate plate is positioned with the cover03. The pin axis06 pushes the teeterboard07 down, then the teeterboard07 will be driven and separate from the left clamp18. The left clamp 18 and the right clamp17 will be driven and push to the cone face of the knob01 by the twist spring19, so that the camera will be tightly clamped onto the pan head.
2. The sliding handle 28 has a slot fit with the fix key of the handle26. With guiding of the leading key 27, the rotating of the sliding handle 28 will drive the screw25 to move forward. Push the steel ball(std 7) to press against the rubbing resistant block21, then the sphere 10 will be tightly pressed by the pushing block20.
3. The micro-adjusting nut24 presses to the nut23, and the nut 23 presses tightly to the plate-shape spring22. With removing of the handle components 26,27,28,29 and rotating the micro-adjusting nut24, the force for the camera weight can be preset. When the micro-adjusting nut rotate rightabout, the screw (std4) will contact with the pin (std3), the micro-adjusting nut staying stilly to avoid the loosening of the perforce.
4. To increase the locking force, the handle length can be extended by pull out the handle components26, 27, 28, 29. This mechanism is fast and easy for operation.

To lock the turntable30 in a direct and fast pace, it is needed to press down the knob34, then the screw will be driven and pressed the lock block36, which will be driven and pushed the orientation ring14. When 360° panning rotation is required, it is only needed to release the knob34.

## Claims

1. A camera pan head having two clamps locked fast connector comprising a sphere (10) with a handle downwards, a pan head base (4) and a handle (26), wherein the pan head base is mounted on the sphere and the sphere is set in the pan head base by the handle, wherein the fast connector consists of function components installed between a box cover(03) and the pan head base(04), the top of which is provided with a connecting knob (01) component for installing the camera with the pan head, said function components of the fast connector comprising a left clamp(18), a right clamp (17), a pendulum lever(16), a hinge(15), a twist spring(19), a press spring(08) and a teeterboard(07); wherein holes in the middle of the left clamp(18) and the right clamp(17) are movably connected by a pin, while the pin is fixed on the pan head base(04), one end of the left and the right clamps are pressed by the twist spring(19), the other ends are arranged to be pressed by the manual clamping force in the operation; the left clamp is connected to a hole in the hinge(15) with a pin, a hole in one end of the pendulum lever(16) is connected to the hinge with an other pin, a concavity of the pendulum lever(16) is opposite to a protrusion of the left clamp(18) and arranged to tooth each other when locking; one end of the teeterboard(07) is connected to the upper side of a cover(05) by a pin axis (06) through a hole, the press spring(08) is installed within a concavity of the middle of the teeterboard(07), the upper face of the teeterboard(07) is touching the pin axis(06), wherein when the camera is connected onto the knob, the knob presses the pin axis(06) which will further press the teeterboard (07) downward, with the effect that the top end of the teeterboard (07) detaches from the left clamp (18), and under the twist spring(19) pressing, the left and right clamp will be driven and pressed onto a cone face of said knob, so that the camera will be fixed on to the pan head; and wherein a turntable mechanism (30) is provided in the bottom of the said handle of the sphere(10), the bottom of which is provided with a connecting nut connected to a tripod.

2. A camera pan head having two clamps locked connector according to claim 1,wherein the extension handle in layers comprises a handle(26), a sliding handle(28), a rubber cover(29) and a leading key (27), the handle(26) is covered by the sliding handle(28) which is covered under the rubber cover(29); within the handle(26) and the sliding handle(28) are respectively provided with a setting key and a slot, the handle(26) and the sliding handle(28) pass the twist movement with the matching of the key(25) and the slot.

3. A camera pan head having two clamps locked connector according to claim 1, wherein the turntable mechanism comprises a turntable(13), a turntable base(32), a scale (33) and an orientation turntable(30), wherein the turntable(13) is fixed between said handle of the sphere(10) and the orientation turntable(30) with a bolt and a nut, the orientation turntable(30) is positioned inside an inner hole of the turntable base(32) by an orientation ring(14), and the scale(33) is adhered into a groove of the turntable base(32).

4. A camera pan head having two clamps locked connector according to claim 3, wherein an orientation knob(34) is installed in one side of the turntable base(32) with a screw(35) and a locking plate(36), and wherein through the screw(35) and locking plate(36) said orientation turntable(30) is locked or unlocked by the knob(34).

5. A camera pan head having two clamps locked connector according to claim 1, wherein the knob(01) is connected with a quadrate plate(02), and wherein under the bottom face of the knob(01) a groove is provided for screwing down with the camera, and a face of the quadrate plate is provided with a plate.

6. A camera pan head having two clamps locked connector according to claim 5, wherein the plate(02) set on the knob(01) is quadrate or polygonal.

## Patentansprüche

1. Kameraschwenkkopf mit einem Schnellankupplungselement mit zwei Klemmen, umfassend eine Kugel (10) mit einem nach unten weisenden Haltegriff, eine Schwenkkopfbasis (4) und einen Haltegriff (26), wobei die Schwenkkopfbasis auf der Kugel montiert wird und die Kugel in die Schwenkkopfbasis durch den Griff eingesetzt wird, wobei das Schnellankupplungselement aus funktionellen Komponenten besteht, die zwischen einer Kastenabdeckung (03) und der Schwenkkopfbasis (04) installiert sind, deren Oberseite mit einem Verbindungsknopf (01) zum Installieren der Kamera an dem Schwenkkopf ausgestattet ist, und wobei die funktionellen Komponenten des Schnellankupplungselements Folgendes umfassen: eine linke Klemme (18), eine rechte Klemme (17), einen Pendelhebel (16), ein Gelenk (15), eine Torsionsfeder (19), eine Druckfeder (08) und eine Wippe (07), wobei Löcher in der Mitte der linken Klemme (18) und der rechten Klemme (17) beweglich verbunden sind über einen Stift, der an der Schwenkkopfbasis (04) befestigt ist, die Torsionsfeder (19) auf ein Ende der linken und der rechten Klemme drückt und die anderen Enden derart ausgelegt sind, dass sie bei Benutzung durch eine manuelle Klemmkraft gedrückt werden können, die linke Klemme mit einem Loch in dem Gelenk (15) über einen Stift verbunden ist, ein Loch in einem Ende des Pendelhebels (16) mit dem Gelenk über einen anderen Stift verbunden ist, eine Höhlung des Pendelhebels (16) gegenüber einer Vorwölbung an der linken Klemme (18) liegt, die derart ausgelegt sind, dass sie beim Ankuppeln ineinander eingreifen, ein Ende der Wippe (07) mit der Oberseite einer Abdeckung (05) über eine Stiftachse (06) durch ein Loch verbunden ist, die Druckfeder (08) in einer Höhlung in der Mitte der Wippe (07) installiert ist und die Oberseite der Wippe (07) die Stiftachse (06) berührt, so dass beim Ankuppeln der Kamera auf dem Knopf dieser auf die Stiftachse (06) drückt, die wiederum die Wippe (07) derart nach unten drückt, dass das obere Ende der Wippe (07) sich von der linken Klemme (18) löst, so dass unter dem Druck der Torsionsfeder (19) die linke und die rechte Klemme angetrieben und auf eine kegelförmige Seite des Knopfes gedrückt werden, so dass die Kamera auf dem Schwenkkopf befestigt wird, und wobei ein Drehscheibenmechanismus (30) im Boden des Handgriffs der Kugel (10) vorgesehen ist und der Boden mit einer Verbindungsmutter für die Verbindung mit einem Stativ ausgestattet ist.

2. Kameraschwenkkopf mit einem Schnellankupplungselement mit zwei Klemmen nach Anspruch 1, wobei der Verlängerungshebel in Schichten Folgendes umfasst: einen Handgriff (26), einen Schiebegriff (28), eine Gummiabdeckung (29) und einen Führungsschlüssel (27), wobei der Handgriff (26) von dem Schiebegriff (28) überdeckt ist, der von der Gummiabdeckung (29) bedeckt wird, und sich in dem Handgriff (26) und dem Schiebegriff (28) ein Stellschlüssel beziehungsweise ein Schlitz befinden, so dass der Handgriff (26) und der Schiebegriff (28) nicht gegeneinander gedreht werden können, wenn der Schlüssel (25) in den Schlitz eingreift.

3. Kameraschwenkkopf mit einem Schnellankupplungselement mit zwei Klemmen nach Anspruch 1, wobei der Drehscheibenmechanismus Folgendes umfasst: eine Drehscheibe (13), eine Drehscheibenbasis (32), eine Skala (33) und eine Ausrichtungsdrehscheibe (30), wobei die Drehscheibe (13) zwischen dem Griff der Kugel (10) und der Ausrichtungsdrehscheibe (30) mittels Schraube und Mutter befestigt ist, die Ausrichtungsdrehscheibe (30) in einer inneren Aussparung der Drehscheibenbasis (32) über einen Ausrichtungsring (14) angeordnet ist und die Skala (33) in einer Rille der Drehscheibenbasis (32) befestigt wird.

4. Kameraschwenkkopf mit einem Schnellankupplungselement mit zwei Klemmen nach Anspruch 3, wobei ein Ausrichtungsknopf (34) in einer Seite der Drehscheibenbasis (32) installiert ist mit einer Schraube (35) und einer Verriegelungsplatte (36), wobei durch die Schraube (35) und die Verriegelungsplatte (36) die Ausrichtungsdrehscheibe (30) mit dem Knopf (34) verriegelt oder gelöst wird.

5. Kameraschwenkkopf mit einem Schnellankupplungselement mit zwei Klemmen nach Anspruch 1, wobei der Knopf (01) mit einer quadratischen Platte (02) verbunden ist und wobei unter der Unterseite des Knopfes (01) eine Rille für das Herunterschrauben mit der Kamera vorgesehen ist und eine Seite der quadratischen Platte mit einer Platte geschwenkt wird.

6. Kameraschwenkkopf mit einem Schnellankupplungselement mit zwei Klemmen nach Anspruch 5, wobei die auf den Knopf (01) aufgesetzte Platte (02) quadratisch oder polygonal ist.

## Revendications

1. Tête panoramique de caméra ayant un connecteur rapide fermé par deux attaches comprenant une sphère (10) avec une poignée vers le bas, une base de tête panoramique (4) et une poignée (26), dans laquelle la base de tête panoramique est montée sur la sphère et la sphère est placée dans la base de tête panoramique par la poignée, dans laquelle le connecteur rapide se compose de composants fonctionnels installés entre un couvercle de boîte (03) et la base de tête panoramique (04), dont la partie supérieure est dotée d'un composant de bouton de connexion (01) pour installer la caméra avec la tête panoramique, lesdits composants fonctionnels du connecteur rapide comprenant une attache gauche (18), une attache droite (17), un levier à balancier (16), une charnière (15), un ressort de torsion (19), un ressort de pression (08) et une bascule (07) ; dans laquelle des trous au milieu de l'attache gauche (18) et de l'attache droite (17) sont raccordés de manière mobile par une broche, alors que la broche est fixée sur la base de tête panoramique (04), une extrémité des attaches gauche et droite est comprimée par le ressort de torsion (19), les autres extrémités sont agencées pour être comprimées par la force de serrage manuelle, en fonctionnement ; l'attache gauche est raccordée à un trou dans la charnière (15) avec une broche, un trou dans une extrémité du levier à balancier (16) est raccordé à la charnière avec l'autre broche, une concavité du levier à balancier (16) est opposée à une saillie de l'attache gauche (18) et agencée pour s'engrener l'une par rapport à l'autre lors du blocage ; une extrémité de la bascule (07) est raccordée au côté supérieur d'un couvercle (05) par un axe de broche (06) par le biais d'un trou, le ressort de pression (06) est installé à l'intérieur d'une concavité du milieu de la bascule (07), la face supérieure de la bascule (07) est en contact avec l'axe de broche (06), dans laquelle lorsque la caméra est connectée sur le bouton, le bouton comprime l'axe de broche (06) qui comprime en outre la bascule (07) vers le bas, avec l'effet que l'extrémité supérieure de la bascule (07) se détache de l'attache gauche (18), et sous le ressort de torsion (19) qui appuie, les attaches gauche et droite sont entraînées et comprimées sur une face conique dudit bouton, de sorte que la caméra est fixée sur la tête panoramique ; et dans laquelle un mécanisme de plaque tournante (30) est prévu au fond de ladite poignée de la sphère (10), dont le fond est doté d'un écrou de raccordement raccordé à un trépied.

2. Tête panoramique de caméra ayant un connecteur fermé par deux attaches selon la revendication 1, dans laquelle la poignée d'extension en couches comprend une poignée (26), une poignée coulissante (28), un revêtement en caoutchouc (29) et une clavette d'attaque (27), la poignée (26) est recouverte par la poignée coulissante (28) qui est recouverte par le revêtement en caoutchouc (29) ; à l'intérieur de la poignée (26) et de la poignée coulissante (28), on prévoit respectivement une clavette de réglage et une fente, la poignée (26) et la poignée coulissante (28) transmettent le mouvement de torsion avec la correspondance de la clavette (25) et de la fente.

3. Tête panoramique de caméra ayant un connecteur fermé par deux attaches selon la revendication 1, dans laquelle le mécanisme de plaque tournante comprend une plaque tournante (13), une base de plaque tournante (32), une échelle (33) et une plaque tournante d'orientation (30), dans laquelle la plaque tournante (13) est fixée entre ladite poignée de la sphère (10) et la plaque tournante d'orientation (30) avec un boulon et un écrou, la plaque tournante d'orientation (30) est positionnée à l'intérieur d'un trou interne de la base de plaque tournante (32) par une bague d'orientation (14), et l'échelle (33) est fixée dans une rainure de la base de plaque tournante (32).

4. Tête panoramique de caméra ayant un connecteur fermé par deux attaches selon la revendication 3, dans laquelle un bouton d'orientation (34) est installé d'un côté de la base de plaque tournante (32) avec une vis (35) et une plaque de blocage (36), et dans laquelle par le biais de la vis (35) et de la plaque de blocage (36), ladite plaque tournante d'orientation (30) est bloquée ou débloquée par le bouton (34).

5. Tête panoramique de caméra ayant un connecteur fermé par deux attaches selon la revendication 1, dans laquelle le bouton (01) est raccordé avec une plaque carrée (02), et dans laquelle sous la face inférieure du bouton (01), on prévoit une rainure pour le vissage avec la caméra, et une face de la plaque carrée est dotée d'une plaque.

6. Tête panoramique de caméra ayant un connecteur fermé par deux attaches selon la revendication 5, dans laquelle la plaque (02) placée sur le bouton (01) est carrée ou polygonale.
